# FASCICULE DE BREVET EUROPEEN

(11) **EP 1 140 386 B1**
(45) Date de publication et mention de la délivrance du brevet: **29.05.2002**
(21) Numéro de dépôt: 99958313.1
(22) Date de dépôt: 13.12.1999
(51) Int. Cl.: B21D 39/04, B21D 39/20

(54) **PROCEDE DE LIAISON DE DEUX PIECES TUBULAIRES COAXIALES OUTIL POUR REALISER CETTE LIAISON ET UTILISATION**
VERFAHREN ZUM VERBINDEN VON ZWEI KOAXIALEN ROHREN, WERKZEUG ZUR HERSTELLUNG DER VERBINDUNG UND ANWENDUNG DES VERFAHRENS
METHOD FOR CONNECTING TWO COAXIAL TUBULAR PARTS, TOOL FOR PERFORMING SUCH A CONNECTION AND USE

(30) Priorité: 22.12.1998 FR 9816263
(43) Date de publication de la demande: 10.10.2001
(73) Titulaire: FRANCO-BELGE DE FABRICATION DE COMBUSTIBLE FBFC, 92400 Courbevoie (FR)
(72) Inventeur: BONNOT, Claude, F-26750 Triors (FR)
(74) Mandataire: Bouget, Lucien
(86) Numéro de dépôt international: FR9903114
(87) Numéro de publication internationale: WO0037194

(56) Documents cités:
- EP-A- 0 570 178
- WO-A-97/41377
- GB-A- 2 003 775

## Description

L'invention concerne un procédé de liaison de deux pièces tubulaires coaxiales et un outil pour réaliser la liaison des pièces, selon les préambules des revendications 1 et 2 respectivement.

Le procédé et l'outil selon l'invention sont utilisés en particulier pour réaliser la liaison entre un tube-guide d'un assemblage de combustible et un manchon d'extrémité du tube-guide.

Les assemblages de combustible pour les réacteurs nucléaires refroidis par de l'eau et en particulier par de l'eau sous pression comportent une ossature dans laquelle des crayons de combustible sont maintenus sous la forme d'un faisceau dans lequel les crayons sont tous parallèles entre eux. L'ossature de l'assemblage de combustible comporte des grilles-entretoises pour le maintien transversal et axial des crayons suivant un réseau régulier, des tubes-guides parallèles aux crayons disposés dans certaines positions à l'intérieur du faisceau et des embouts d'extrémité. Les tubes-guides, qui constituent des éléments de structure de l'ossature de l'assemblage de combustible et qui peuvent être utilisés pour le guidage de crayons absorbants des grappes de commande du réacteur nucléaire ont une longueur supérieure à la longueur des crayons et comportent des parties d'extrémité permettant leur fixation sur les embouts de l'assemblage de combustible. Les parties d'extrémité supérieures des tubes-guides qui sont fixées sur l'embout supérieur de l'assemblage de combustible peuvent être constituées par des manchons engagés sensiblement sans jeu sur les extrémités des tubes guides, dans une disposition coaxiale. Ces manchons d'extrémité des tubes-guides peuvent comporter par exemple une partie taraudée ou des lames flexibles d'engagement dans une ouverture de l'embout supérieur de l'assemblage de combustible, dans le cas d'assemblages de combustible dont l'embout supérieur est démontable, la liaison du tube-guide et de l'assemblage de combustible pouvant être réalisée par vissage d'un manchon fileté ou par un manchon de blocage.

On doit assurer une liaison entre le tube-guide et son manchon d'extrémité telle que le tube-guide et le manchon soient bloqués aussi bien en translation axiale qu'en rotation autour de leur axe commun. Cette liaison doit être réalisée sans soudure, du fait de la nature des matériaux constituant les tubes-guides, des procédés de fabrication des éléments de l'assemblage de combustible et des caractéristiques de résistance mécanique et de résistance à la corrosion exigées des éléments constituant l'assemblage de combustible. Les tubes-guides doivent être assemblés également par un procédé sans soudure avec des manchons de traversée des cellules des grilles-entretoises.

Pour assurer la liaison d'un tube-guide et d'un manchon dans lequel le tube-guide est engagé, on a proposé des procédés de liaison par expansion diamétrale des parois du tube-guide et du manchon engagées l'une sur l'autre, principalement lorsque les matériaux du tube-guide et du manchon sont différents.

On a par exemple proposé de réaliser l'expansion diamétrale suivant une zone annulaire continue, en utilisant un outil de dudgeonnage tournant.

Un tel procédé ne permet pas d'assurer un très bon blocage en rotation du manchon par rapport au tube-guide.

On a également proposé de réaliser, dans les zones de jonction du tube et du manchon, des bossages en saillie radiale vers l'extérieur du tube-guide et du manchon, dans au moins deux zones circonférentielles des pièces à assembler espacées l'une de l'autre dans la direction axiale. On réalise, dans chacune des zones circonférentielles des pièces tubulaires à assembler, au moins deux bossettes en saillie radiale et généralement quatre bossettes séparées les unes des autres, suivant la circonférence des pièces, par des parties de parois des pièces qui s'adaptent à la déformation produite par les bossettes. Le procédé permet d'assurer une bonne liaison mécanique entre les pièces tubulaires qui sont à la fois bloquées en translation et en rotation dans deux zones circonférentielles des pièces.

On utilise, pour réaliser cette expansion diamétrale, un outil constitué d'un expanseur tubulaire comportant généralement quatre lames flexibles séparées par des fentes de direction axiale et un mandrin d'actionnement de forme tronconique qui est déplacé axialement à l'intérieur de l'expanseur pour réaliser l'écartement des lames à l'intérieur des pièces dont on effectue la liaison par expansion radiale de leurs parois (GB-A-2.003.775).

La réalisation de liaisons sur chacun des tubes-guides d'un assemblage de combustible est une opération généralement longue et délicate dans la mesure où l'on doit former successivement les bossettes, dans une première zone et dans une seconde zone circonférentielle des pièces tubulaires. La mise en place de l'expanseur à l'intérieur du tube-guide est une opération délicate, du fait qu'il faut assurer une orientation et un alignement dans la direction axiale très précis des bossettes. Pour assurer une bonne fixation mécanique des pièces tubulaires l'une sur l'autre, il faut généralement réaliser des bossettes ayant une profondeur importante dans la direction radiale, par rapport aux dimensions des pièces tubulaires, ce qui accroît la difficulté de l'opération. Il est également difficile d'assurer une fixation sans jeu, en particulier dans la direction axiale, du fait du comportement élastique du matériau des parois lors de l'opération d'expansion et après cette opération.

En outre, le tube et le manchon subissent une striction entre les zones déformées, ce qui modifie leurs caractéristiques dimensionnelles.

Dans le WO-A-97/41377, on a proposé un assemblage de tubes, dans le domaine de l'exploitation pétrolière, dans lequel les tubes à assembler comportent des dépressions ou bossages coopérant entre eux. Les dépressions ou bossages peuvent être réalisés par un outil comportant des billes mobiles radialement et un mandrin de déplacement radial des billes assurant la déformation des tubes.

Le but de l'invention est donc de proposer un procédé de liaison de deux pièces tubulaires coaxiales engagées l'une à l'intérieur de l'autre, sur une partie au moins de leur longueur dans une direction axiale, consistant à réaliser, par expansion radiale des parois des deux pièces tubulaires, dans la partie des pièces en engagement, dans au moins deux zones des pièces espacées l'une de l'autre dans la direction axiale, au moins deux bossettes en saillie radiale, vers l'extérieur, séparées l'une de l'autre, suivant la circonférence des pièces, par des parties de parois intermédiaires des pièces, ce procédé permettant d'obtenir une liaison mécanique très efficace et sans jeu, avec une très bonne productivité et une profondeur des bossages réduite dans la direction radiale des bossages tout en limitant la striction des pièces.

Dans ce but, on réalise, simultanément, par expansion radiale des parois des pièces tubulaires, les bossettes, dans les deux zones espacées dans la direction axiale, de manière à soumettre les pièces tubulaires à des contraintes de traction entre les zones espacées, sans striction des pièces tubulaires.

L'invention concerne également un outil d'expansion pour réaliser la liaison des pièces tubulaires comportant un expanseur dont les lames flexibles comportent chacune deux bossages de formage d'une empreinte dans les parois des pièces tubulaires espacés l'un de l'autre dans la direction longitudinale axiale des lames.

Afin de bien faire comprendre l'invention, on va maintenant décrire, à titre d'exemple, en se référant aux figures jointes en annexe, une liaison entre un tube-guide et un manchon d'extrémité, la réalisation de cette liaison par le procédé de l'invention et un outil d'expansion pour réaliser la liaison.

La figure 1 est une vue en perspective d'une partie d'extrémité d'un tube-guide portant un manchon fixé sur le tube-guide par le procédé de l'invention.

La figure 2 est une vue en perspective d'un expanseur d'un outil d'expansion pour réaliser le procédé de l'invention.

La figure 3 est une vue en coupe axiale agrandie de la partie d'extrémité de l'expanseur.

La figure 4 est une vue latérale du mandrin d'actionnement de l'expanseur.

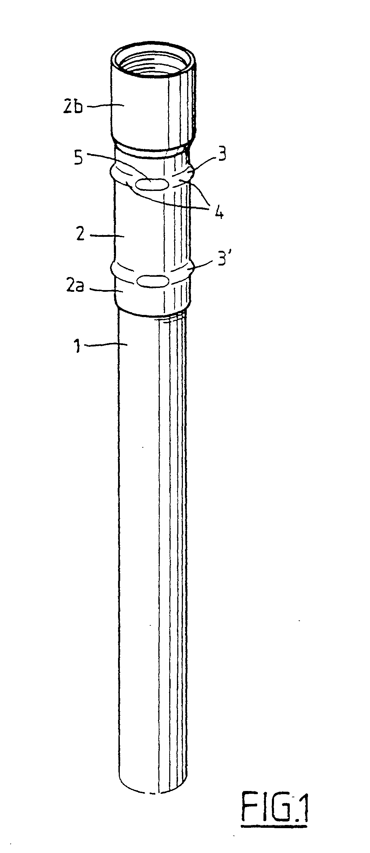

Sur la figure 1, on voit une partie d'extrémité supérieure d'un tube-guide 1 d'un assemblage de combustible constituant la partie d'extrémité supérieure du tube-guide sur laquelle est engagé et fixé un manchon d'extrémité 2 par l'intermédiaire duquel on peut fixer le tube-guide par une liaison mécanique vissée dans l'embout supérieur de l'assemblage de combustible.

Le tube-guide 1 est généralement en alliage de zirconium et l'embout d'extrémité 2 peut être réalisé en un matériau différent, par exemple en acier inoxydable.

Le manchon 2 comporte un corps 2a de forme tubulaire dont le diamètre intérieur est sensiblement égal au diamètre extérieur du tube-guide 1 (diamètre de 12 à 14 mm) et une partie d'extrémité 2b élargie diamétralement et taraudée intérieurement. La fixation de l'extrémité du tube-guide 1 dans l'embout supérieur de l'assemblage de combustible peut être réalisée en utilisant une douille qui est vissée à l'intérieur de la partie taraudée de l'extrémité 2b du manchon 2.

La liaison entre le tube-guide 1 et le manchon d'extrémité 2, de manière que ces deux pièces tubulaires soient bloquées l'une par rapport à l'autre en translation axiale et en rotation autour de leur axe commun est réalisée par déformation des parois des deux pièces tubulaires 1 et 2 engagées l'une sur l'autre dans une disposition coaxiale, dans deux zones 3 et 3' espacées l'une de l'autre dans la direction axiale des pièces tubulaires 1 et 2.

Les deux zones déformées 3 et 3' sont identiques et on ne décrira que la zone 3. La zone déformée 3 comporte quatre bossettes 4 (deux bossettes sont visibles sur la figure 1), en saillie radiale vers l'extérieur des pièces tubulaires 1 et 2 et présentant sensiblement la forme de secteurs toriques. Les quatre bossettes 4 sont placées à 90° l'une de l'autre autour de l'axe des pièces tubulaires 1 et 2 et sont réalisées par expansion des parois du manchon 2 et du tube-guide 1 qui est engagé dans le manchon 2 jusqu'à la partie d'extrémité 2b.

Deux bossettes 4 successives d'une zone de déformation telle que 3 ou 3' sont séparées par une partie 5 des parois des deux pièces tubulaires accommodant la déformation des bossettes 4 entre lesquelles elle est placée.

Pour réaliser la liaison représentée sur la figure 1 par le procédé de l'invention, on engage le tube-guide 1 dans un manchon, puis on réalise en une seule opération qui sera décrite plus loin l'expansion des deux pièces 1 et 2 dans les zones 3 et 3'.

Ce procédé est mis en oeuvre en utilisant un outil d'expansion qui sera décrit ci-après.

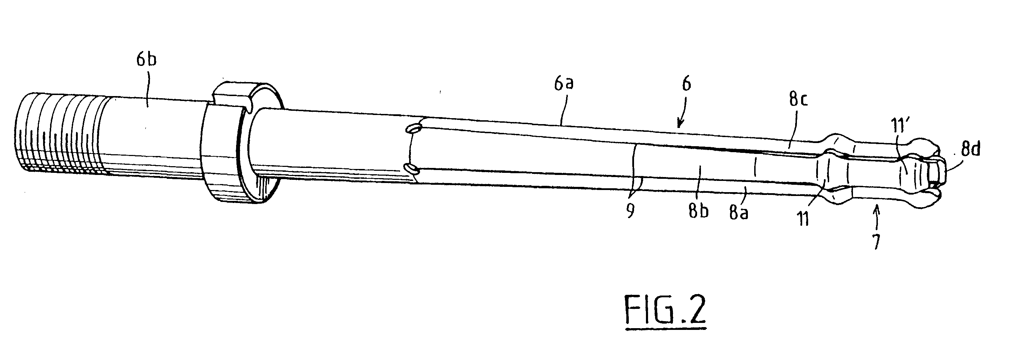

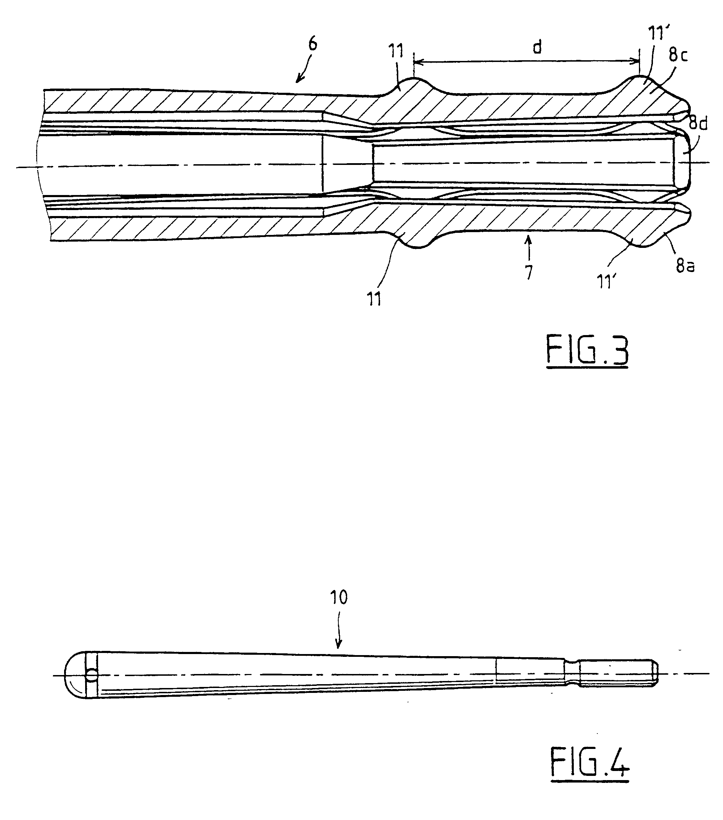

L'outil d'expansion comporte principalement un expanseur qui a été représenté sur les figures 2 et 3 et un mandrin d'actionnement de l'expanseur qui a été représenté sur la figure 4.

L'expanseur, représenté sur les figures 2 et 3 et désigné de manière générale par le repère 6, comporte un corps allongé de forme tubulaire dont une première partie 6a constitue l'expanseur proprement dit et une seconde partie d'extrémité 6b une partie de montage de l'outil sur un support d'outil.

La partie 6a de l'expanseur 6 comporte, à l'une de ses extrémités, la tête d'expansion 7 par l'intermédiaire de laquelle on réalise, à l'intérieur des pièces tubulaires, des empreintes en creux sur leur partie interne et des bossettes en saillie radiale sur leur surface extérieure.

Dans sa partie 6a constituant l'expanseur proprement dit, le corps de l'expanseur 6 forme quatre lames flexibles 8a, 8b, 8c et 8d, s'étendant dans la direction longitudinale axiale de l'expanseur 6.

Les lames 8a, 8b, 8c et 8d sont constituées par des secteurs découpés et usinés dans la paroi tubulaire du corps de l'expanseur. La paroi du corps tubulaire de l'expanseur comporte quatre fentes 9 séparant chacune deux lames successives de l'expanseur et s'étendant sur la plus grande longueur de la partie 6a du corps d'expanseur, entre l'extrémité de la tête d'expanseur 7, et une zone voisine de la partie de support 6b de l'expanseur. Les lames 8a, 8b, 8c, et 8d, solidaires du corps de l'expanseur à leur extrémité opposée à la tête d'expansion 7, peuvent être écartées les unes des autres pour réaliser l'expansion, chacune des lames flexibles se déformant alors par flexion élastique.

L'écartement des lames dans des directions radiales est obtenu en introduisant, par traction, le mandrin tronconique 10 représenté sur la figure 4 dans l'alésage central de la tête d'expansion 7.

Le corps de l'expanseur 6, dans sa partie 6a, présente un diamètre extérieur inférieur au diamètre intérieur d'un tube-guide, de manière que l'expanseur puisse être introduit à l'intérieur du tube-guide sur lequel est engagé, en position coaxiale, un manchon d'extrémité dont on effectue la liaison avec le tube-guide. La tête d'expansion 7 est introduite dans une partie du tube-guide engagée à l'intérieur du manchon pour effectuer une liaison du tube-guide et du manchon par expansion et sertissage, comme il sera décrit ci-après.

Comme il est visible sur les figures 2 et 3, chacune des lames 8a, 8b, 8c et 8d de l'expanseur 6 présente, dans sa partie d'extrémité constituant la tête d'expansion 7, une forme et un profil adaptés à la réalisation simultanée de deux empreintes et bossettes dans les parois du tube-guide et du manchon d'extrémité. Chacune des lames 8a, 8b, 8c et 8d comporte, dans sa partie d'extrémité, un premier et un second bossages d'expansion 11 et 11' ayant sensiblement la forme d'une portion de tore, en saillie vers l'extérieur de la tête 7 de l'expanseur.

Sur la figure 3, qui est une vue en coupe axiale de la tête de l'expanseur, on voit le profil méridien de la surface extérieure de la partie d'extrémité des lames 8a et 8c dont les bossages 11 et 11' forment deux ondulations séparées par une distance d, dans la direction axiale de l'expanseur 6. Les premier et second bossages 11 et 11' des différentes lames successives 8a, 8b, 8c et 8d sont alignés suivant une première et une seconde lignes circonférentielles de l'expanseur 6 et respectivement centrés par rapport à deux plans de section droite de l'expanseur séparés par la distance d.

Le profil méridien des bossages 11 et 11' qui est adapté à la réalisation de l'expansion et du sertissage des pièces tubulaires 1 et 2, pour obtenir une fixation efficace des pièces l'une sur l'autre, peut comporter, par exemple, une partie centrale, une partie interne dirigée vers le second bossage et une partie externe opposée, ces trois parties étant de forme courbe.

Les trois parties du profil méridien des bossages se raccordent en des points d'inflexion de ce profil, la partie centrale du bossage étant convexe vers l'extérieur de l'expanseur et les parties interne et externe concaves vers l'extérieur.

Deux paires de bossages 11, 11' successives d'une lame de l'expanseur sont séparées par une fente 9 et l'ensemble des bossages successifs 11 ainsi que l'ensemble des bossages successifs 11' constituent des surfaces de déformation sensiblement toriques en quatre parties séparées par les fentes 9.

Lorsqu'on réalise l'expansion des lames de l'expanseur dont la tête 7 est placée à l'intérieur d'une partie d'un tube-guide engagée dans un manchon d'extrémité, les bossages 11 et 11' de chacune des lames de l'expanseur déplacés vers l'extérieur par traction sur l'actionneur 10, réalisent dans les parois en contact du tube-guide et du manchon des empreintes alignées suivant deux directions circonférentielles du tube et du manchon. Les empreintes réalisées en creux dans la surface interne du tube-guide et du manchon se traduisent par des bossettes sur la surface externe du manchon et du tube-guide, ces bossettes étant réalisées simultanément suivant les deux lignes circonférentielles, de manière à être parfaitement emboîtées l'une dans l'autre.

Les profils courbes des bossages toriques 11 et 11' décrits plus haut permettent de réaliser une déformation progressive (mais très rapide) du métal des parois du tube-guide et du manchon et de réduire ainsi les contraintes de traction s'exerçant entre les deux bossages en cours de formage.

Le fait que la déformation des parois produit des contraintes de traction entre les bossages permet d'annuler le jeu axial pouvant subsister entre les bossages, lors du retour élastique du métal à l'issue du formage.

Les avantages mentionnés ci-dessus liés à la réalisation simultanée de deux lignes de bossages circonférentielles dans les pièces tubulaires permettent d'obtenir un effet d'accrochage et de blocage des pièces tubulaires satisfaisant, tout en limitant la profondeur des empreintes des bossages réalisées pendant l'expansion des pièces tubulaires. On a pu ainsi réduire considérablement la hauteur des bossettes réalisées dans les pièces tubulaires, par rapport à un procédé dans lequel on effectue successivement chacune des lignes circonférentielles de bossettes. Cette profondeur des empreintes ou bossettes a pu être réduite de 20 à 40 % à résistance de liaison égale. On réduit donc ainsi la contrainte du métal situé entre les bossettes et donc la striction.

Bien entendu, pour réaliser simultanément les deux lignes de bossettes dans les pièces tubulaires, il est nécessaire d'exercer un effort plus important sur l'outillage, pour déplacer le mandrin actionneur à l'intérieur de l'expanseur.

Pour limiter les risques de grippage des surfaces en contact de l'actionneur conique et de l'expanseur, pendant le déplacement de l'actionneur dans la direction axiale, tout en procurant à ces parties de l'outillage des propriétés mécaniques leur permettant d'assurer leur fonction, l'actionneur ou mandrin conique peut être par exemple réalisé en un acier de construction traité pour présenter une dureté supérieure à 65 HCR et revêtu d'une couche de nitrure de titane dopé au carbone d'une dureté comprise par exemple entre 2500 et 4000 HV.

L'expanseur peut être réalisé en un acier de construction traité ayant une dureté supérieure à 55 HCR et comportant un revêtement extérieur constitué par chromage dur, ce revêtement extérieur ayant une dureté au moins égale à 850 HV. Il est possible d'utiliser une machine équipée d'un seul outil comportant un expanseur 6 et un actionneur conique 10 ou, au contraire, une machine automatique permettant d'actionner simultanément un ensemble d'outils d'expansion. Une telle machine équipée de vingt-quatre outils peut réaliser simultanément et en une seule opération le sertissage de manchons d'extrémité sur les vingt-quatre tubes-guides d'un assemblage de combustible.

L'invention présente donc l'avantage d'accroître considérablement la productivité dans le cadre de la fabrication des éléments d'un assemblage de combustible et de réduire la hauteur des parties expansées des parois des pièces tubulaires et donc de réduire les contraintes dans ces pièces. En outre, on évite la striction du tube entre les parties expansées ou bossages, ce qui permet de réaliser l'opération d'expansion avec un expanseur ne comportant pas de branches de maintien des parois des pièces tubulaires, entre les lames d'expansion.

Le procédé et le dispositif de l'invention permettent également, du fait de la limitation des contraintes, de conserver des caractéristiques mécaniques élevées des pièces tubulaires dont on assure la liaison.

Bien entendu, l'invention n'est pas limitée strictement au mode de réalisation qui a été décrit ; par exemple, on peut utiliser un outil d'expansion comportant un nombre de lames différent de quatre. Toutefois, l'outil doit comporter au moins deux lames ayant chacune deux bossages.

L'invention s'applique non seulement dans le cas de la liaison de tubes-guides d'assemblages de combustible avec des manchons dans lesquels ces tubes-guides sont engagés mais encore dans tous les cas où l'on assure la liaison de pièces tubulaires coaxiales, quelles que soient les fonctions et destinations de ces pièces.

## Revendications

1. Procédé de liaison de deux pièces tubulaires coaxiales (1, 2) engagées l'une à l'intérieur de l'autre, sur une partie au moins de leur longueur dans leur direction axiale commune, consistant à réaliser, par expansion radiale des parois des deux pièces tubulaires (1, 2), dans la partie des pièces en engagement, dans au moins deux zones des pièces espacées l'une de l'autre dans la direction axiale, au moins deux bossettes en saillie radiale vers l'extérieur des pièces séparées l'une de l'autre, suivant la circonférence des pièces (1, 2) par des parties de parois intermédiaires (5) des pièces (1, 2), **caractérisé par le fait qu'**on réalise simultanément, par expansion radiale des parois des pièces tubulaires (1, 2), les bossettes (4) dans les deux zones espacées dans la direction axiale, de manière à soumettre les pièces tubulaires à des contraintes de traction entre les zones espacées, sans striction des pièces tubulaires (1, 2).

2. Outil pour réaliser la liaison de deux pièces tubulaires coaxiales(1, 2) engagées l'une à l'intérieur de l'autre, sur une partie au moins de leur longueur dans la direction axiale comportant un expanseur (6) ayant un corps tubulaire dont le diamètre extérieur est inférieur au diamètre intérieur de la pièce tubulaire interne (1) comportant, sur une partie de sa longueur dans la direction axiale, des fentes (9) traversant sa paroi et délimitant au moins deux et, par exemple, quatre lames flexibles (8a, 8b, 8c, 8d) présentant des parties d'extrémité profilées constituant une tête d'expansion( 7) et un actionneur conique (10) pour l'écartement des lames (8a, 8b, 8c, 8d) de l'expanseur (6) par déplacement axial à l'intérieur de l'expanseur (6), **caractérisé par le fait que** chacune des lames (8a, 8b, 8c, 8d) de l'expanseur comporte, dans sa partie d'extrémité profilée, un premier bossage (11) et un second bossage (11') séparés l'un de l'autre par une distance (d) dans la direction axiale de l'expanseur, les premiers bossages (11) et les seconds bossages (11') des lames flexibles (8a, 8b, 8c, 8d) de l'expanseur (6) étant alignés suivant une première et suivant une seconde lignes circonférentielles à la surface extérieure de l'expanseur (6).

3. Outil suivant la revendication 2, **caractérisé par le fait que** chacun des bossages (11, 11') d'une partie d'extrémité d'une lame flexible (8a, 8b, 8c, 8d) de l'expanseur (6) présente globalement la forme d'une portion de tore et un profil méridien comportant une partie centrale convexe vers l'extérieur de l'expanseur (6) et deux parties d'extrémité concaves vers l'extérieur de l'expanseur (6).

4. Outil suivant l'une quelconque des revendications 2 et 3, **caractérisé par le fait que** l'actionneur conique (10) de l'outil est en un acier de construction traité pour présenter une dureté supérieure à 65 HCR et revêtu d'une couche de nitrure de titane dopé au carbone d'une dureté comprise entre 2500 et 4000 HV, l'expanseur de l'outil étant en un acier de construction traité pour présenter une dureté supérieure à 55 HCR et revêtu extérieurement d'une couche réalisée par chromage dur d'une dureté supérieure à 850 HV.

5. Utilisation d'un procédé selon la revendication 1 ou d'un dispositif suivant l'une quelconque des revendications 2 à 4, pour réaliser la liaison entre un tube-guide (1) d'un assemblage de combustible d'un réacteur nucléaire refroidi à l'eau et d'un manchon (2) tel qu'un manchon d'extrémité, dans lequel le tube-guide (1) est engagé sensiblement sans jeu.

## Claims

1. A method of connecting two coaxial tubular pieces (1, 2) engaged one inside the other, over at least a part of their length in their common axial direction, consisting in forming, by radial expansion of the walls of the two tubular pieces (1, 2) in at least two zones of the pieces spaced from one another in the axial direction, at least two bosses projecting radially outwards from the pieces and separated from one another around the circumference of the pieces (1, 2) by intermediate parts of the wall (5) of the pieces (1, 2), **characterized in that** the bosses (4) are formed simultaneously by radial expansion of the walls of the tubular pieces (1, 2) in the two zones spaced in the axial direction, in such a manner as to subject the tubular pieces to tensile stress between the spaced zoned, without necking of the tubular pieces (1, 2).

2. A tool for effecting connection of two coaxial tubular pieces (1, 2) engaged one inside the other, over at least a part of their length in the axial direction, comprising an expander (6) having a tubular body whose external diameter is less than the internal diameter of the inside tubular piece (1), comprising slits (9) through its wall over part of its length in the axial direction, delimiting at least two, and for example four, flexible tongues (8a, 8b, 8c, 8d) having profiled end parts forming an expansion head (7), and a conical actuator (10) for spreading the tongues (8a, 8b, 8c, 8d) of the expander (6) by axial displacement inside the expander (6), **characterized in that** each of the tongues (8a, 8b, 8c, 8d) of the expander comprises a first boss (11) and a second boss (11') on its profiled end part, separated from one another by a distance (d) in the axial direction of the expander (6), the first bosses (11) and the second bosses (11') of the flexible tongues (8a, 8b, 8c, 8d) of the expander (6) being aligned round first and second circumferential lines on the external surface of the expander (6).

3. A tool according to claim 2, **characterized in that** each of the bosses (11, 11') of an end part of a flexible tongues (8a, 8b, 8c, 8d) of the expander (6) has overall the form of part of a torus and a meridian profile comprising a central part convex towards the outside of the expander (6) and two end parts concave towards the exterior of the expander (6).

4. A tool according to either of claims 2 and 3, **characterized in that** the conical actuator (10) of the tool is of structural steel treated to exhibit a hardness greater than 65 HCR and coated with a layer of titanium nitride doped with carbon with a hardness lying between 2500 and 4000 HV, the expander of the tool being of a structural steel treated to exhibit a hardness greater than 55 HCR and coated externally with a layer formed by hard chromium plating with a hardness greater than 850 HV.

5. Use of a method according to claim 1 or a device according to any of claims 2 to 4, for effecting connection between a guide tube (1) of a fuel assembly of a water cooled nuclear reactor and a sleeve (2), such as an end sleeve, in which the guide tube (1) is engaged substantially without play.

## Patentansprüche

1. Verfahren zum Verbinden von zwei über wenigstens einen Teil ihrer Länge in ihrer gemeinsamen axialen Richtung ineinandersteckenden koaxialen rohrförmigen Teilen (1, 2), darin bestehend, dass man durch radiale Expansion der Wände der beiden rohrförmigen Teile (1, 2) in dem Bereich, in dem die Teile ineinanderstecken, in wenigstens zwei in axialer Richtung voneinander beabstandeten Zonen wenigstens zwei radial nach außen vorstehende Buckel realisiert, die auf dem Umfang der Teile (1, 2) durch Zwischenbereiche (5) der Wände der Teile (1, 2) voneinander getrennt sind,
**dadurch gekennzeichnet,**
**dass** man simultan durch radiale Expansion der Wände der rohrförmigen Teile (1, 2) die Buckel (4) in den beiden in axialer Richtung beabstandeten Zonen realisiert, indem man die rohrförmigen Teile zwischen den beabstandeten Zonen Zugspannungen aussetzt, ohne Einschnürung bzw. Querkontraktion der rohrförmigen Teile (1, 2).

2. Werkzeug zur Herstellung der Verbindung von zwei über wenigstens einen Teil ihrer Länge in axialer Richtung ineinandersteckenden koaxialen rohrförmigen Teile (1, 2),
eine Expansionsvorrichtung (6) mit einem rohrförmigen Körper umfassend, deren Außendurchmesser kleiner ist als der Innendurchmesser des rohrförmigen Innenteils (1), die über einen Teil ihrer Länge in axialer Richtung Schlitze (9) umfasst, die ihre Wand durchqueren und wenigstens zwei und z.B. vier flexible Lamellen bzw. Zungen (8a, 8b, 8c, 8d) abgrenzen, deren profilierte Endstücke einen Expansionskopf (7) bilden,
und eine konische Betätigungsvorrichtung (10) umfassend, zur Spreizung der Lamellen bzw. Zungen (8a, 8b, 8c, 8d) der Expansionsvorrichtung (6) durch axiale Verschiebung im Innern der Expansionsvorrichtung (6),
**dadurch gekennzeichnet,**
**dass** jede der Lamellen bzw. Zungen (8a, 8b, 8c, 8d) der Expansionsvorrichtung an ihrem profilierten Endstück einen ersten Wulst (11) und einen zweiten Wulst (11') umfasst, getrennt voneinander durch einen Abstand (d) in der axialen Richtung der Expansionsvorrichtung, wobei die ersten Wülste (11) und die zweiten Wülste (11') der flexiblen Lamellen bzw. Zungen (8a, 8b, 8c, 8d) der Expansionsvorrichtung (6) an der Außenoberfläche der Expansionsvorrichtung (6) entsprechend einer ersten und entsprechend einer zweiten Umfangslinie ausgerichtet sind.

3. Werkzeug nach Anspruch 2, **dadurch gekennzeichnet, dass** jeder der Wülste (11, 11') eines Endstücks einer flexiblen Lamelle bzw. Zunge (8a, 8b, 8c, 8d) der Expansionsvorrichtung (6) global die Form eines Teils eines Torus bzw. Kreiswulstes und ein Meridianprofil aufweist, das auf der Außenseite der Expansionsvorrichtung (6) einen konvexen Mittelteil und zwei konkave Endstücke umfasst.

4. Werkzeug nach einem der Ansprüche 2 und 3, **dadurch gekennzeichnet, dass** die konische Betätigungsvorrichtung (10) des Werkzeugs aus Konstruktionsstahl ist, behandelt für eine Härte über 65 HCR und überzogen mit einer Schicht aus Kohlenstoff-dotiertem Titannitrid mit einer zwischen 2500 und 4000 HV enthaltenen Härte, und die Expansionsvorrichtung (6) des Werkzeugs aus einem Konstruktionsstahl ist, so behandelt, dass seine Härte über 55 HCR beträgt, und außen mit einer Schicht überzogen, die durch Hartverchromung eine Härte von über 850 HV aufweist.

5. Anwendung eines Verfahrens nach Anspruch 1 oder einer Vorrichtung nach einem der Ansprüche 2 bis 4 zur Herstellung der Verbindung zwischen einem Führungsrohr (1) einer Brennstoffkasette bzw. einem Brennelementbündel eines wassergekühlten Kernreaktors und einer Muffe (2) wie etwa einer Endmuffe, in der das Führungsrohr (1) im Wesentlichen spielfrei sitzt.
